# EUROPEAN PATENT APPLICATION

(11) **EP 1 862 960 A1**
(43) Date of publication of application: **05.12.2007**
(21) Application number: 05792699.0
(22) Date of filing: 25.03.2005
(51) Int. Cl.: G06Q 20/00, G07F 19/00

(54) **METHOD FOR PAYING VIA A COMPUTER NETWORK**

(71) Applicant: "Cyberplat" Open Joint Stock Company, Moscow, 121108 (RU)
(72) Inventor: GRIBOV, Andrei Yurievich, Moscow, 121614 (RU)
(74) Representative: Holmström, Stefan Mikael
(86) International application number: PCT/RU2005/000135
(87) International publication number: WO 2006/107227

(57) **Abstract**

In the inventive system, the payment via a computer network is carried out in a real time mode. The system ensures the confidentiality of payments effected by its clients, since it uses its own payment channels for paying services rendered by service providers to the clients. The exchange of the client (user) unique identifiers via the Internet network makes it possible, while using a sufficiently simple channel, to rule out or reduce to a minimum tolerable level an unfair access to resources.

## Description

### Field of the Art

The present invention relates to computer technology and more particularly to using thereof for the payment for and rendering of various services via a computer network.

### State of the Art

Known from RU 2124231 is a system for carrying out cashless monetary transactions, which comprises information input/output devices (e.g. a system of EFTPOS type with POS terminals for plastic card reading), a line for connecting input/output devices to a processing center (if the communication line is wireless, a unit for identifying wireless communication devices is provided), a processing center (otherwise the main EFTPOS device) and a network of banking and credit institutions. Each information input/output device comprises a card reading unit, a PIN keyboard with a coding system, a modem, a communication interface (a unit for connecting to the communications device) connected to a modem, an output messaging unit, a central processor connected to the above-cited units, a wireless communications device made with a possibility of connecting to the wireless communications network for connection to a banking or credit institution network, wherein the central processor is made with a possibility of activating communications via a modem and a communications interface with the network of a banking or credit institution and transmitting the identification data of the merchant and the payment system client and the transaction operation data for providing the transaction of money from the bank account or credit card of the client to the bank account of the merchant and for sending signals to the output messaging device with information to authorize or reject the transaction or with other information about the transaction. The input/output device can operate with the network of a banking or credit institution via any convenient communications channel (not only via a telephone line). The main advantage of the system is the provision of an additional possibility to carry out cashless payments via mobile telephone service, without connecting to a stationary telephone network.

A disadvantage of said system is the necessity of using a card reading unit: which adds to the cost of the equipment, and also insufficient protection from unfair use of confidential information, secured by the issued cards and by the very system of transmitting encoded information.

Known from RU 2162245 is a method of paying for services and receiving commodities, using identification codes. The method comprises: shaping identification codes of commodities and services in the database of a central control device; recording the identification codes of commodities and services on carriers; user's purchase of the carrier with the recorded identification code of a commodity and a service; user's shaping a request for the provision of a commodity or service by addressing a request-shaping and response-receiving device transmitting the identification code of a commodity or service to the central control device; receiving the commodity or service identification code transmitted by the user in the central control device and verifying the received code for conformity with the established criteria; shaping and transmitting to the request-shaping and response-receiving device, when the result of verifying the received identification code is positive, a response message initiating the operation of commodity serving or service rendering to the user. The advantages of this method are: simplicity and convenience of the procedures of paying for and receiving commodities and services, rapid provision thereof.

The disadvantages of the described method are: the method requires a complicated and labor-consuming procedure of shaping and attributing codes to each item of the commodity and service being sold, the creation and vending of code-bearing carriers (provision of vendors and points of sale); the system must feature a high degree of confidence in the central control device and vendors in view of complete information about the commodities and services being available ("closed system"); the purchaser is "depersonalized" and not protected from his or her carrier being used by somebody else.

Known in the art is a system of remote financial servicing of a client for carrying out cashless payments in a telecommunication network, particularly account servicing, with the help of so-called "provider companies" related to the field of service, and arranging single payments from the company's account according to the consumers' instructions (US 5383113 A1).

In this system, a service provider company periodically bills a consumer for a sum total of payments released on the consumer's initiative. The system comprises using a database of financial institutions, containing information about the state of the accounts of the provider's consumers, using a database containing information about the consumer's merchants as well as about the payments as such, a means of consumer's communication with the provider's central processing device, a program for controlling the central processing device, intended for analyzing consumer's instructions received via a telecommunications network, a means for periodic billing consumers by the service provider company.

The known payment systems are based on that payments are carried out against clients' accounts, this involving definite difficulties in paying, because it is necessary to secure communication of consumers' accounts with merchants' accounts for rendering paid services. Besides, there are clients which for some reasons do not wish to disclose their accounts in the system and/or employ services of banks or other institutions for transferring payments to merchants' accounts. All this complicates the payment procedure and requires time for carrying out payments as such in order to obtain access to a service in the communications network.

Taken as the basis of the present invention is a technical problem to provide a method for paying which allows carrying out payments in a relatively simple way while securing a high level of the confidentiality of payments.

In the proposed system the payment of services is carried out in a real time mode. The system ensures the confidentiality of payments of its clients, because it uses its own payment channels for paying for services rendered to the clients by service providers. The exchange of the client's (user's) unique identifiers through the Internet network makes it possible, while using a sufficiently simple communications channel, to exclude or reduce to a minimum tolerable level an unfair access to resources.

### Essence of the Invention

The posed technical problem is solved due to the provision of a method for paying services via a computer data transmission network, which comprises shaping through the agency of an electronic commutation a service payment system between at least one terminal of a merchant institution, at least one server of a processing center, at least one operator's accounting system, and at least one server of a settlement bank; and carrying out the following steps: assigning to a client a unique identifier in the operator's accounting system; when a client addresses a merchant institution with an application for payment the operator's services and presents a unique identifier, in the terminal of the merchant institution a request is shaped to the server of the processing center, containing data about the client's unique identifier and about the cost of the service(s) rendered by the operator, said request is signed with the help of an electronic digital signature and sent via a public data network to the server of the processing center, on the server of the processing center the terminal of the merchant institution is identified on the basis of the electronic digital signature, and a request is sent via a protected data transmission channel to the server of the settlement bank concerning the availability of sufficient funds on the account of the merchant institution, wherein the server of the settlement bank is embodied with a possibility to yield a positive reply in the case of sufficient funds being available on said account, and in the case the positive reply is received, with the help of said server of the processing center, the operator's accounting system is interrogated via the data transmission system with a view to verifying the data indicated by the client and obtaining a permission to carry out the operation, wherein the operator's accounting system is embodied with a possibility to yield a positive reply in the case of successful verification of the data indicated by the client, and in the case the response received from the operator's accounting system is positive, the response containing data about successful verification of the data indicated by the client is transmitted with the help of the server of the processing center to the terminal of the merchant institution, a request to confirm carrying out the operation is directed with the help of the terminal of the merchant institution to the server of the processing center, on receipt of the request to confirm carrying out the operation, with the help of the server of the processing center a request for transferring the amount of the cost of services from the account of the merchant institution in favor of the operator is sent via the protected data transmission channel to the server of the settlement bank, wherein the server of the settlement bank is embodied with a possibility to yield a positive reply for carrying out the operation in the case of successful transfer of the sum from the account of the merchant institution in favor of the operator, and, in the case the response received from the server of the settlement bank for carrying out the operation is positive, the information about successful completion of the operation is transmitted with the help of the server of the processing center to the terminal of the merchant institution, and a request for carrying out the operation is transmitted to the operator's accounting system, on the basis of which request the service is rendered to the client

According to one of the variants of embodying the present invention, all the steps of the method are carried out in a real time mode.

In another preferred variant of embodying the invention, the transmission of data via a public data network is carried out in accordance with the HTTPS protocol with the use of the SSL certificate, wherein the Internet network is used as the public data network.

According to a still another variant of embodying the invention, an electronic commutation is shaped between the server of the processing center and the server of the settlement bank by means of a specially organized channel between databases of the Oracle link type.

In yet another preferred variant of embodying the invention, a digital electronic signature is employed, created with the use of encryption engines of the CryptoPro type, and as the unique client identifier one of the following means is employed: a card with a digital code, a card with a bar code, a magnetic card with a record.

### Brief Description of the Drawings

The present invention will become apparent to a person skilled in the art from a detailed description of the invention with reference to the figures of the drawings, in which:
Fig. 1 shows diagrammatically a service payment system;
Fig. 2 shows diagrammatically a terminal of a merchant institution;
Fig. 3 shows diagrammatically a server of a processing center;
Fig. 4 shows diagrammatically an operator's accounting system;
Fig. 5 shows diagrammatically the interaction of payment system participants.

### Detailed Description of the Invention

A detailed description of the invention with reference to the accompanying drawings will be given hereinbelow.

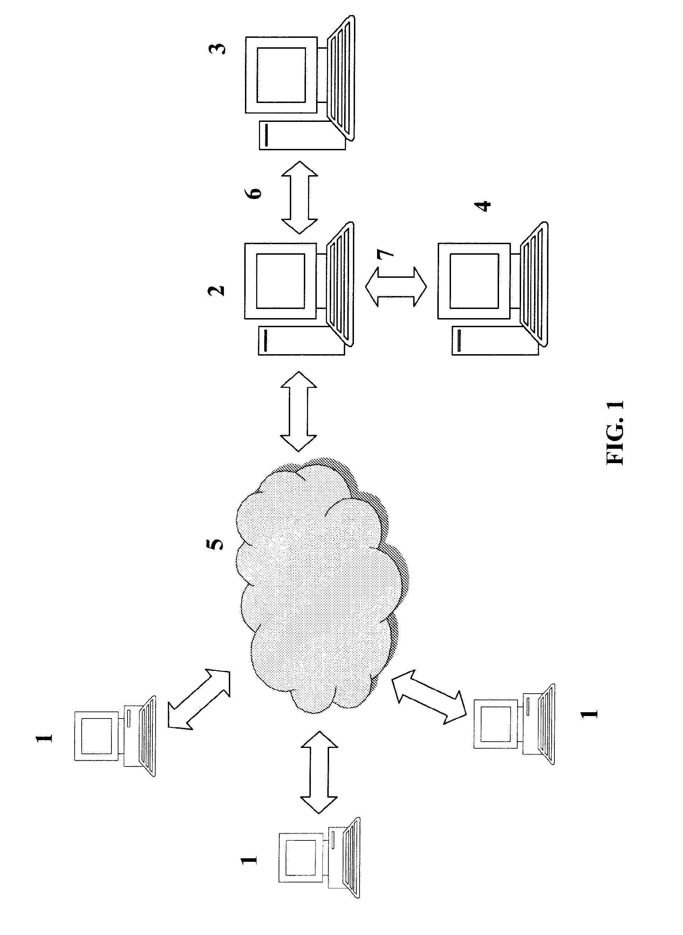

Presented in Figures 1 - 4 is a non-limiting example of a service payment system with the help of which the present invention is realized.

Fig. 1 presents a payment system which comprises at least one terminal 1 of a merchant institution, communicated via a public data transmission network 5, for instance the Internet, with a server 2 of a processing center, which, in its turn, is communicated via data transmission channels 6 and 7 with a server 3 of a settlement bank and with an accounting system 4 of an operator (service provider) respectively.

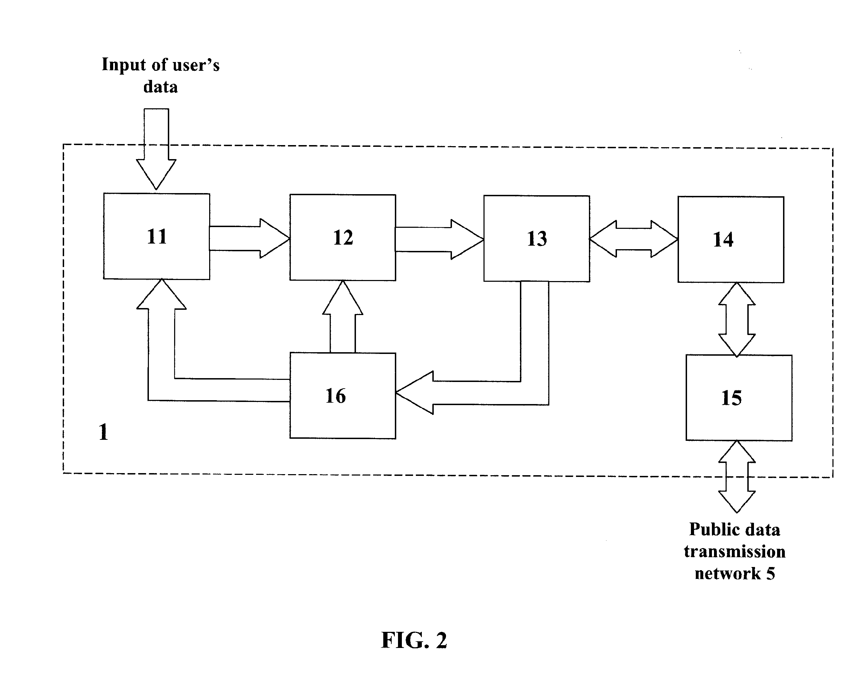

Fig. 2 presents terminal 1 of a merchant institution, comprising: an input/output device 11 whose output is connected to a first input of a request-shaping unit 12, whose output, in its turn, is connected to an input of a unit 13 for shaping/verifying an electronic digital signature, a first input/output of which is connected to an input/output of a unit 14 for shaping a protected protocol communicated with a communication device 15 which, in its turn, is coupled to the public data transmission network 5, a second output of the unit 13 for shaping/verifying the electronic digital signature is connected to an input of a response processing unit 16, a first output of which is connected to a second input of the request-shaping unit 12 and a second output of which is connected to the input of the input/output device 11.

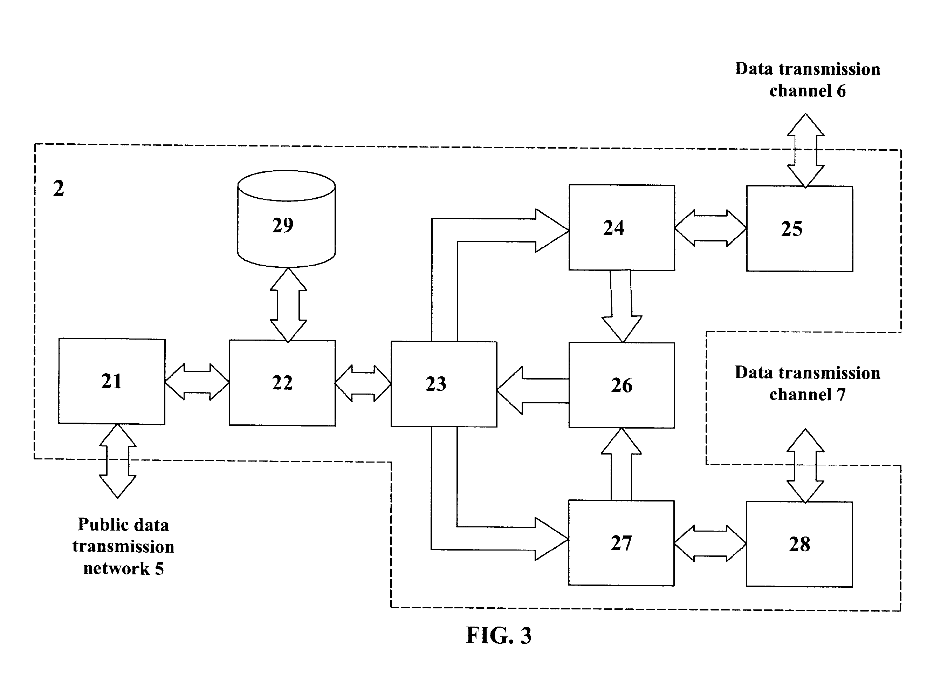

Fig. 3 presents server 3 of a processing center, comprising: a device 21 for communication with the public data transmission network 5, whose input/output is connected to a first input/output of a unit 22 for verifying/shaping an electronic signature, which, in its turn, is connected with a second input/output to a database 29 of merchant institutions and is connected with a third input/output to an input/output of a request/response-shaping unit 23, whose first output is connected to an input of a unit 27 for shaping and ciphering/deciphering the data transmission channel, wherein an output of the unit 27 for shaping and ciphering/deciphering the data transmission channel is connected to a first input of a response-processing unit 26, whose output is connected to an input of the request/response-shaping unit 23, wherein the input/output of the unit 27 for shaping and ciphering/deciphering the data transmission channel is connected to an input/output of a device 28 for communication with the operator, which device, in its turn, is connected to the data transmission channel 7, a second output of the request/response-shaping unit 23 is connected to an input of a data transmission channel shaping unit 24 whose output is connected to a second input of the response processing unit 26, and the input/output is connected, in its turn, to an input/output of a device 25 for communication with a bank, which device is connected, in its turn, to the data transmission channel 6.

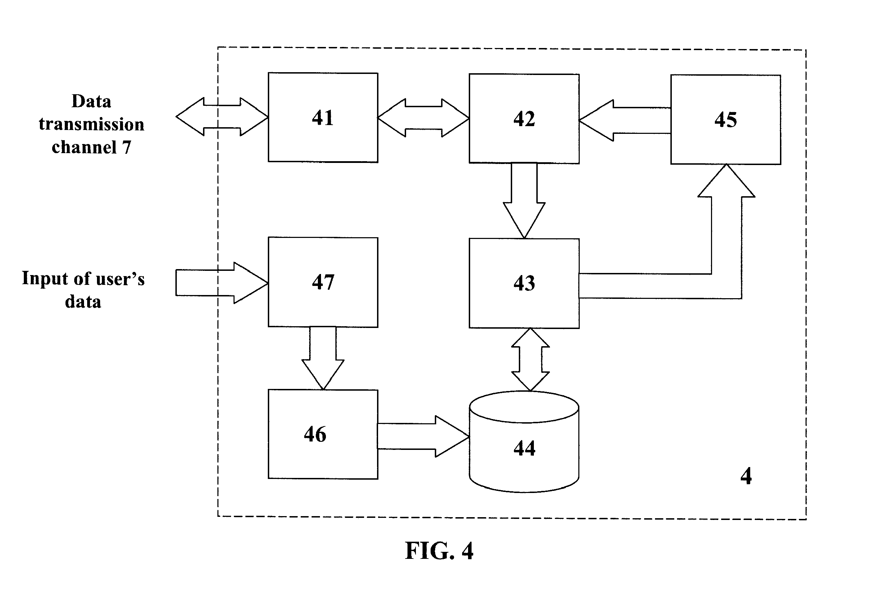

Fig. 4 presents server 4 of the operator's accounting system, comprising: a device 41 for communication with the server of the processing center, communicated with the data transmission channel 7 and connected with its input/output to an input/output of a unit 42 for shaping and ciphering/deciphering the data transmission channel, whose input is connected to an output of a response shaping unit 45 and whose output is connected to an input of a processing unit 43, an output of the processing unit 43 is connected to an input of the response shaping unit 45, and an input/output is connected to clients' database 44, and also a unit 46 for shaping accounting records, whose output is connected to the clients' database 44 and whose input is connected to an output of a device 47 for inputting clients' data.

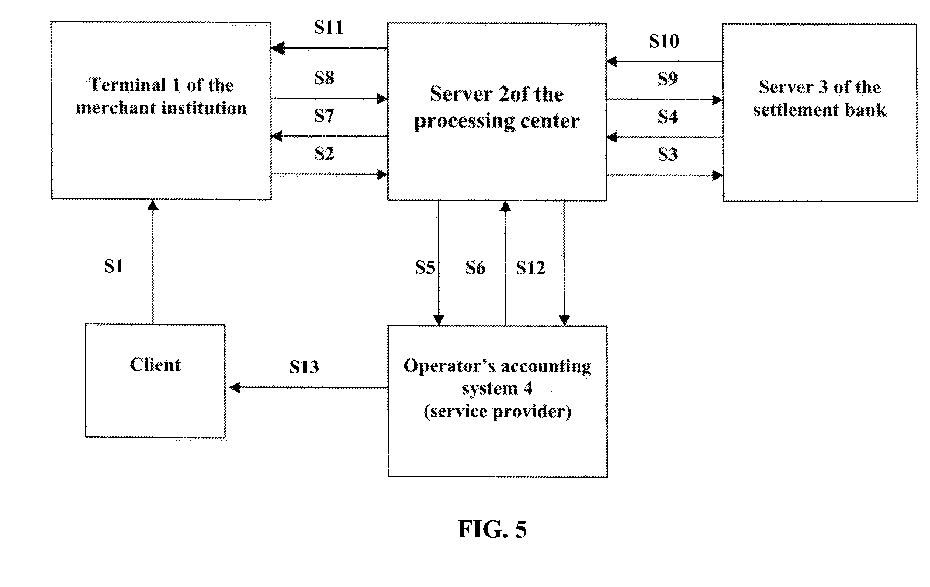

The claimed invention will now be explained by considering an example presented hereinbelow and illustrating the operation of a service payment system with reference to Fig. 5.

The inventive method makes it possible to use different unique user identifiers. These may be plastic cards with a digital or bar code, magnetic cards with a unique identifier record and other similar devices ensuring technical presentation of information about the client unique identifier.

In the operator's accounting system an accounting record is created with the help of device 47 for inputting clients' data and unit 46 for shaping accounting records with assigning a unique identifier thereto in accounting system 4 of the operator, and said record is preserved in clients' database 44 of the operator's accounting system 4. When a client addresses a merchant institution with an application for payment the operator's services, in terminal 1 of the merchant institution with the help of input device 11 a unique identifier and the cost of the operator's services are introduced into request shaping unit 12 (S1). Then the request shaping unit 12 of the terminal of the merchant institution shapes a request to server 2 of the processing center, containing data about the unique client identifier and about the cost of the service(s) rendered by the operator, and with the help of unit 13 for shaping/verifying an electronic digital signature signs the shaped request. Then the thus shaped request to the server of the processing center is sent via unit 14 for shaping a protected protocol and with the help of communication device 15 via public data transmission network 5 is sent to the processing center server 2 (S2).

The server 2 of the processing center receives the request via communication devices 21 and with the help of unit 22 for verifying/shaping an electronic signature and database 29 of merchant institutions identifies the terminal of the merchant institution. In the case the identification of the terminal of the merchant institution is positive, the server 2 of the processing center with the help of request/response-shaping unit 23 shapes and sends via data transmission channel shaping unit 24 and device 25 for communication with a bank and data transmission channel 6 a request to server 3 of the settlement bank concerning the availability of funds on the account of the merchant institution (S3). Having received and processed the request, the server of the settlement bank shapes a response concerning the availability or absence of funds on the account of the merchant institution and sends the response to the server 2 of the processing center (S4). On the server 2 of the processing center the response received via the data transmission channel 6, the device 25 for communication with the bank and the data transmission shaping unit 24 the response is processed with the help of the response processing unit 26. When the response concerning the availability of funds on the account of the merchant institution is positive, the server 2 of the processing center with the help of the request/response-shaping unit 23 shapes a request containing the unique client identifier to the operator's accounting system 4 with a view to identifying the client and obtaining a permission to carry out the operation. The thus shaped request is sent via unit 27 for shaping and ciphering/deciphering the data transmission channel, device 28 for communication with the operator and data transmission channel 7 to the operator's accounting system 4 (S5).

The operator's accounting system 4 processes with the help of the identification unit 43 the request received via the communication device 41 with the server of the processing center and the unit 42 for shaping and ciphering/deciphering the data transmission channel and, basing on the unique user identifier contained therein and on the clients' database 44, identifies the client in the operator's accounting system 4. If the identification of the client is positive, the operator's accounting system with the help of the response shaping unit 45 shapes a response to the server 2 of the processing center, which contains a permission to carry out the operation, and sends it via the unit 42 for shaping and ciphering/deciphering the data transmission channel and the means 41 for communication with the server of the processing center and the data transmission channel 7 to the server 2 of the processing center.

After the reception of positive response from the operator's accounting system 4 via the data transmission channel 7, the device 28 for communication with the operator, the unit 27 for shaping and ciphering/deciphering the data transmission channel, and after processing said positive response in the response processing unit 26 (S6), the server 2 of the processing center with the help of the request/response-shaping unit 23 shapes a response to the terminal of the merchant institution, which contains information about the successful verification of the data indicated by the client, signs said response with the help of the unit 22 for verifying/shaping the electronic signature and transmits it via the communication device 21 and the public data transmission network 5 to the terminal 1 of the merchant institution (S7).

The terminal 1 of the merchant institution, after the reception of the response about the successful verification of the data indicated by the client via the units 13, 14, 15 and after processing said response in the response processing unit 16, shapes with the help of the units 12, 13 and sends in the real time mode with the help of the unit 14 and the device 15 a request to confirm the operation (S8), on reception and processing thereof the server 2 of the processing center shapes with the help of the unit 23 a request to the server of the settlement bank for the transfer of the amount of the service costs from the account of the merchant institution in favor of the operator (service provider) and transmits it with the help of the unit 24 and the device 25 along the data transmission channel 6 to the server 3 of the settlement bank (S9).

The server 3 of the settlement bank processes the request and transfers the amount of service costs from the account of the merchant institution to the account of the operator, and in the case the result of the operation is successful, the server 3 shapes a response containing a permission to carry out the operations. The response thus shaped is sent along the data transmission channel 6 to the server 2 of the processing center (S10). The response received via the data transmission channel 6, the device 25 and the unit 24 is processed in the unit 26, and in the case the response received from the server 3 of the settlement bank concerning carrying out the operation is positive, the server 2 of the processing center shapes with the help of the unit 23 and transmits with the help of the unit 22 and the device 21 a response containing information about the successful completion of the operation to the terminal 1 of the merchant institution (S11), and also shapes and transmits via the unit 27, the device 28 and the data transmission channel 7 a request to confirm carrying out the operation in the operator's accounting system 4 (to the service provider) (S12), where the request is processed and on the basis of which service is provided to the client (S13).

All the units of the claimed system can be embodied with the use of processor means operating on the basis of the operation algorithms presented in the description. Particular variants of the software can be selected by specialists, proceeding from the described algorithms.

The transmission of data from the terminal of the merchant institution to the server of the processing center can be effected via a public network, e.g. such as the Internet, according to the HTTPS protocol with the use of SSL certificate of the processing center. The Apache web server providing connection between the merchant institution and the processing center can be realized as a cluster of any number of servers operating under the Linux OS. The connection between the web server and the DB can be realized as a pool of connections (dispatcher).

The identification of transmitted data from the terminal of the merchant institution can be performed with the use of an electronic digital signature on the basis of non-symmetric encryption (open and closed keys), the employed cryptolibrary is of original PGP-based design. In a general case any known methods of electronic signature can be used. The databases of the processing center and of the settlement bank are Oracle.

The communication between the accounting system of the operator (service provider) and the server of the processing center can be accomplished over special protocols well known to specialists in this field of the art, which enable channel encryption (tunneling).

The interaction between the processing center and the server of the settlement bank is realized in the form of a specially organized channel between the databases (Oracle link).

The signature under the documents for some operators can be made with the use of certified encryption means, e.g. CryptoPro.

Hence, the proposed method makes it possible to perform monetary operations in a real time mode or in a real time approximating mode when carrying out an unlimited number of operations. Said method ensures an enhanced security of users against illegal actions of other persons due to the fact that the database of client unique identifiers is disposed on a separate computer inaccessible via a public network, and only the accounting device of the operator (service provider) has access to the databases.

### Industrial Applicability

The proposed method and the system for carrying it into effect can be used for confidential and rapid service payment in a real time mode with the merchant institution terminals found in different geographic locations, and also rules out the necessity for the clients to keep funds on its account.

## Claims

1. A method for paying services via a computer data transmission network, consisting in shaping through the agency of an electronic commutation a service payment system between at least one terminal of a merchant institution, at least one server of a processing center, at least one operator's accounting system, and at least one server of a settlement bank, and carrying out the following steps:
assigning to a client a unique identifier in the operator's accounting system;
when a client addresses a merchant institution with an application for payment the operator's services and presents a unique identifier, in the merchant institution's terminal a request is shaped to the server of the processing center, containing data about the client's unique identifier and about the cost of the service rendered by the operator, said request is signed with the help of an electronic digital signature and sent via a public data network to the server of the processing center,
on the server of the processing center the terminal of the merchant institution is identified on the basis of the electronic digital signature, and a request is sent via a protected data transmission channel to the server of the settlement bank concerning the availability of sufficient funds on the merchant institution's account, wherein the server of the settlement bank is embodied with a possibility to yield a positive reply in the case of sufficient funds being available on said account, and
in the case the positive reply is received, with the help of said server of the processing center server, the operator's accounting system is interrogated via the data transmission system with a view to verifying the data indicated by the client and obtaining a permission to carry out the operation, wherein the operator's accounting system is embodied with a possibility to yield a positive reply in the case of successful verification of the data indicated by the client, and
in the case the response received from the operator's accounting system is positive, the response containing data about successful verification of the data indicated by the client is transmitted with the help of the server of the processing center to the terminal of the merchant institution,
a request to confirm carrying out the operation is directed with the help of the terminal of the merchant institution to the server of the processing center,
on receipt of the request to confirm carrying out the operation, with the help of the server of the processing center a request for transferring the amount of the service costs from the account of the merchant institution in favor of the operator is sent via the protected data transmission channel to the server of the settlement bank, wherein the server of the settlement bank server is embodied with a possibility to yield a positive reply for carrying out the operation in the case of successful transfer of said amount from the account of the merchant institution in favor of the operator, and
in the case the response received from the server of the settlement bank for carrying out the operation is positive, the information about successful completion of the operation is transmitted with the help of the server of the processing center to the terminal of the merchant institution, and a request for carrying out the operation is transmitted to the operator's accounting system, on the basis of which request the service is rendered to the client.

2. The method of claim 1, **characterized in that** all the steps are carried out in a real time mode.

3. The method of claim 1, **characterized in that** the transmission of data via the public network is carried out according to the HTTPS protocol with the use of the SSL certificate.

4. The method of any one of claims 1 or 3, **characterized in that** the Internet is used as the public network.

5. The method of claim 1, **characterized in that** the electronic commutation between the server of the processing center and the server of the settlement bank is shaped by means of a specially organized of Oracle link type channel between the databases.

6. The method of claim 1, **characterized in that** use is made of the electronic digital signature created with the use of encryption means of CryptoPro type.

7. The method of claim 1, **characterized in that** one of the following means is used as the unique client identifier: a card with a digital code, a card with a bar code, a magnetic card with a record.
